# FASCICULE DE BREVET EUROPEEN

(11) **EP 2 027 000 B1**
(45) Date de publication et mention de la délivrance du brevet: **03.08.2011**
(21) Numéro de dépôt: 07765348.3
(22) Date de dépôt: 11.06.2007
(51) Int. Cl.: B60S 1/40

(54) **DISPOSITIF DE FIXATION D'UN BALAI D'ESSUIE-GLACE SUR UN BRAS**
VORRICHTUNG ZUR BEFESTIGUNG EINES SCHEIBENWISCHERBLATTES AN EINEM ARM
DEVICE FOR ATTACHING A WINDSHIELD WIPER BLADE ON AN ARM

(30) Priorité: 14.06.2006 FR 0605327
(43) Date de publication de la demande: 25.02.2009
(73) Titulaire: VALEO SYSTEMES D'ESSUYAGE, 78321 La Verrière (FR)
(72) Inventeur: BAQUE, Sylvie, F-63119 Chateaugay (FR)
(74) Mandataire: Rosolen-Delarue, Katell
(86) Numéro de dépôt international: PCT/EP2007/055690
(87) Numéro de publication internationale: WO 2007/144318

(56) Documents cités:
- WO-A-2005/102802
- FR-A- 2 866 298
- FR-A1- 2 830 823

## Description

La présente invention concerne un dispositif de fixation permettant le montage d'un balai d'essuie-glace quelconque à l'extrémité d'un bras porte-balai.

L'invention trouve une application particulièrement avantageuse, mais non exclusive, dans le domaine des systèmes d'essuyage pour véhicules automobiles.

Contrairement aux balais standards classiques majoritairement employés jusqu'à aujourd'hui, un balai plat présente la particularité d'être dépourvu de structure à palonniers. Cette nouvelle catégorie de balai d'essuie-glace dispose toujours d'une lame racleuse souple, mais l'armature externe chargée de la supporter est ici remplacée par une ossature flexible qui est directement intégrée à ladite lame.

La structure si particulière des balais plats présente toutefois l'inconvénient de ne pas être compatible avec les principes d'assemblage qui sont habituellement utilisés pour le couplage des balais standards avec des bras porte-balai notamment de type crochet. En effet, l'extrême compacité d'un balai plat ainsi que l'absence d'ouverture à travers sa structure, ne permettent pas de mouvements relatifs de grandes ampleurs entre ledit balai et le bras devant en être équipé, ce qui interdit notamment toute possibilité d'accrochage suivant une disposition relative sensiblement orthogonale.

C'est pourquoi des solutions spécifiques ont dues être développées pour permettre le montage des balais d'essuie-glace plats aux extrémités de bras notamment de type crochets. A cet égard, il est connu d'utiliser un dispositif de fixation comprenant un connecteur destiné à être fixé sur la structure du balai, ainsi qu'un adaptateur à même d'être couplé d'une part au connecteur par liaison mobile et d'autre part au bras suivant une direction sensiblement parallèle au corps du balai (voir par exemple le document FR 2866298A).

De manière à pouvoir garantir le blocage en position du bras, notamment de son extrémité, sur l'adaptateur, et donc un parfait couplage entre le bras et le balai plat, des moyens de verrouillage sont habituellement prévus. Ceux-ci consistent généralement en un ou plusieurs éléments de blocage élastiquement déformables qui exercent leur action directement sur l'extrémité du bras.

A l'usage, il apparaît cependant important d'éviter tout risque de désengagement en cours de fonctionnement du balai par rapport au bras. C'est pourquoi généralement, les moyens de verrouillage comprennent en outre un organe de maintien qui est soit monté mobile soit monté amovible, et qui une fois en place est à même d'empêcher toute déformation indésirable de chaque élément de blocage. Cet organe se présente traditionnellement sous la forme d'un volet, d'un capot ou d'une languette.

Il n'en demeure pas moins qu'au final, les dispositifs de fixation des balais plats sont composés de davantage de pièces que leurs homologues des balais d'essuie-glace classiques, ce qui représente une complexité d' assemblage et d'utilisation, ainsi qu'un surcoût non négligeable en terme de prix de revient. Sachant que la complexité d'un assemblage et la présence d'organe amovible lui confèrent une fiabilité réduite.

Aussi, le problème technique à résoudre par l'objet de la présente invention, est de proposer un dispositif de fixation permettant le montage d'un balai d'essuie-glace à l'extrémité d'un bras porte-balai, par exemple de type crochet, ledit dispositif de fixation comprenant un connecteur destiné à être fixé au balai, ainsi qu'un adaptateur destiné à être couplé d'une part à un bras, suivant une position dite de fixation, et d'autre part au connecteur de manière mobile suivant au moins deux positions, respectivement de verrouillage du bras, dite position de fonctionnement, et de déverrouillage du bras, dite position de montage, l'adaptateur comportant au moins un élément de verrouillage apte à se déformer élastiquement entre une position active dans laquelle il bloque le bras en position de fixation, et une position passive dans laquelle il autorise le déblocage du bras, dispositif de fixation qui permettrait d'éviter les problèmes de l'état de la technique en étant notamment significativement moins onéreux, tout en offrant une fiabilité sensiblement amélioré.

La solution au problème technique posé consiste, selon la présente invention, en ce que le connecteur comporte au moins un dégagement permettant la déformation élastique dudit élément de verrouillage entre sa position active et sa position passive, lorsque l'adaptateur est en position de déverouillage,

l'adaptateur est couplé au connecteur par liaison pivotante lorsque l'adaptateur est en position de fonctionnement, celui-ci est pivoté par rapport au connecteur, selon une inclinaison donnée et que lorsque l'adaptateur est en position de montage, celui-ci est pivoté par rapport au connecteur selon un inclinaison sensiblement distincte de celle de la position de fonctionnement.

Il est entendu que dans l'ensemble de ce texte, la notion de position s'entend au sens très large du terme, c'est-à-dire qu'elle ne désigne pas une valeur angulaire précise mais plutôt un débattement angulaire d'amplitude limitée qui serait centré autour d'une valeur moyenne bien déterminée. Cette caractéristique est principalement destinée à prendre en compte les incontournables jeux de fonctionnement qui sont indispensables au bon fonctionnement du dispositif de fixation, mais aussi le fait que l'écart angulaire entre le bras et le balai va immanquablement être amené à évoluer lors de la mise en oeuvre effective de cet ensemble.

En complément, le connecteur comporte des moyens pour maintenir l' élément de verrouillage en position active, lorsque l'adaptateur est en position de verrouillage.

Quoi qu'il en soit, l'invention telle qu'ainsi définie présente l'avantage de pouvoir verrouiller l'emboîtement du bras sur l'adaptateur sans avoir recours à une quelconque pièce supplémentaire, et ce même dans le cas où c'est un balai plat qui est destiné à être couplé à l'extrémité du bras porte-balai.

Le verrouillage s'opère automatiquement lorsque l'adaptateur est basculé en position de fonctionnement, tandis que le déverrouillage s'obtient fort logiquement de façon tout aussi automatique dès lors que ledit adaptateur est pivoté en sens inverse vers la position de montage.

Si cette simplicité à la fois structurelle et fonctionnelle s'avère bien évidemment avantageuse économiquement parlant, il n'en demeure pas moins qu'elle constitue par ailleurs un véritable gage de fiabilité.

Il est à noter que l'ensemble du dispositif de fixation est agencé de manière à ce que la position de montage, encore appelée position d'assemblage, et la position de fonctionnement soient bien distinctes l'une de l'autre d'un point de vue angulaire.

On observe en outre que dans la pratique, l'invention est applicable à tout type de balais d'essuie-glace, et notamment aux balais droits classiques, ainsi qu'à la nouvelle génération de balais plats. Elle est par ailleurs parfaitement compatible avec différentes tailles de bras, notamment de type crochet.

La présente invention concerne également les caractéristiques qui ressortiront au cours de la description qui va suivre, et qui devront être considérées isolément ou selon toutes leurs combinaisons techniques possibles.

Cette description, donnée à titre d'exemple non limitatif, est destinée à mieux faire comprendre en quoi consiste l'invention et comment elle peut être réalisée. Elle est par ailleurs donnée en référence aux dessins annexés dans lesquels:

La figure 1 illustre en perspective un dispositif de fixation qui est conforme à un premier mode de réalisation de l'invention ; ledit dispositif de fixation étant représenté en position de fonctionnement
La figure 2 est une vue similaire à la figure 1, mais avec le dispositif de fixation en position d'assemblage.
La figure 3 montre en perspective le connecteur du dispositif de fixation visible aux figures 1 et 2.
La figure 4 fait apparaître plus précisément l'adaptateur qui est monté au sein du dispositif de fixation des figures 1 et 2.
La figure 5 illustre, en coupe longitudinale, un balai d'essuie-glace plat qui est couplé à l'extrémité d'un bras porte-balai de type crochet, par l'intermédiaire d'un dispositif de fixation qui est conforme aux figures 1 à 4 et qui est représenté ici en position de fonctionnement.
La figure 6 est une vue similaire à la figure 5, mais avec le dispositif de fixation en position d'assemblage.
La figure 7 constitue une vue analogue aux figures 5 et 6, mais avec le bras crochet et le dispositif de fixation en position de pré-assemblage.
La figure 8 illustre un connecteur de dispositif de fixation, qui est conforme à un second mode de réalisation de l'invention.
La figure 9 représente quant à elle un connecteur de dispositif de fixation, qui est conforme à un troisième mode de réalisation de l'invention.

Pour des raisons de clarté, les mêmes éléments ont été désignés par des références identiques. De même, seuls les éléments essentiels pour la compréhension de l'invention ont été représentés, et ceci sans respect de l 'échelle et de manière schématique.

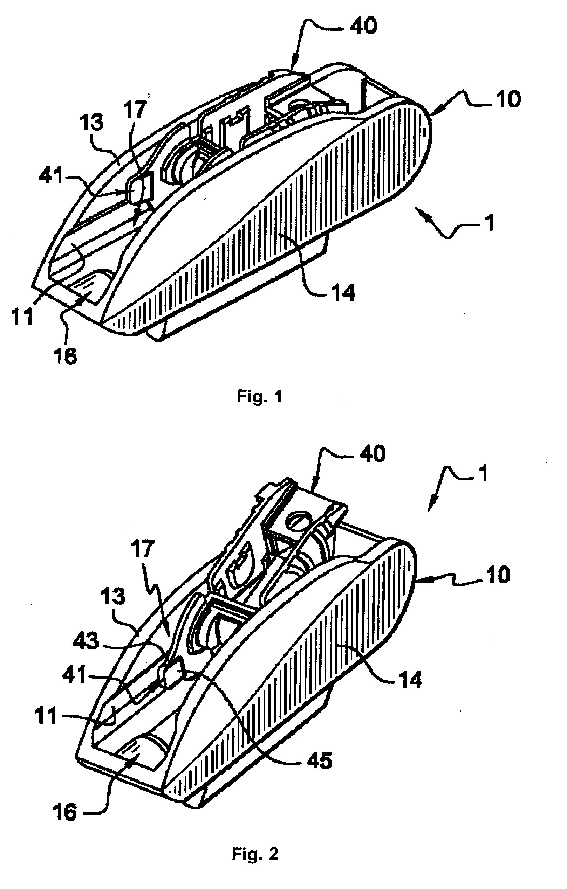

Les figures 1 et 2 illustrent un dispositif de fixation 1 dont la fonction est de permettre le montage d'un balai d'essuie-glace plat 100, à l'extrémité d'un bras porte-balai 200 de type crochet.

Ce dispositif de fixation 1 se compose essentiellement de deux éléments distincts, qui sont cependant voués à être associés conjointement de manière permanente en vue de former un ensemble fonctionnel. On trouve en premier lieu un connecteur 10 qui est avant tout une pièce support destinée à être fixé à la structure du balai plat 100. L'autre partie du dispositif de fixation 1 consiste quant à elle en un adaptateur 40, c'est-à-dire une sorte d'interface qui est en mesure à la fois d'être montée pivotante sur le connecteur 10, et par ailleurs d'être emboîté dans une position dite de fixation, à l'intérieur de la partie en forme de crochet 210 du bras porte-balai 200.

Conformément à l'objet de la présente invention, on note tout d'abord que l'adaptateur 40 est doté de deux éléments de verrouillage 41, 42 qui sont aptes à se déformer élastiquement entre une position active dans laquelle ils sont en mesure de bloquer le crochet 210 en position de fixation, et une position passive dans laquelle ils sont à même de s'étendre à distance dudit crochet 210.

Là encore conformément à l'objet de la présente invention, on remarque ensuite que l'ensemble est agencé de manière à ce que le corps du connecteur 10 soit en mesure de maintenir chaque élément de verrouillage 41, 42 en position active, lorsque l'adaptateur 40 est pivoté dans une position dite de fonctionnement (position de verrouillage du bras) avec une inclinaison bien déterminée par rapport au connecteur 10 (figure 1).

Toujours conformément à l'objet de la présente invention, on observe enfin que pour chaque élément de verrouillage 41, 42, le corps du connecteur 10 est pourvu d'un dégagement 11, 12 permettant la déformation élastique dudit élément de verrouillage 41, 42 entre sa position active et sa position passive, lorsque l'adaptateur 40 est pivoté dans une position dite de montage (position de déverrouillage du bras) avec une inclinaison par rapport au connecteur 10 qui est sensiblement distincte de celle correspondant à la position de fonctionnement (figure 2).

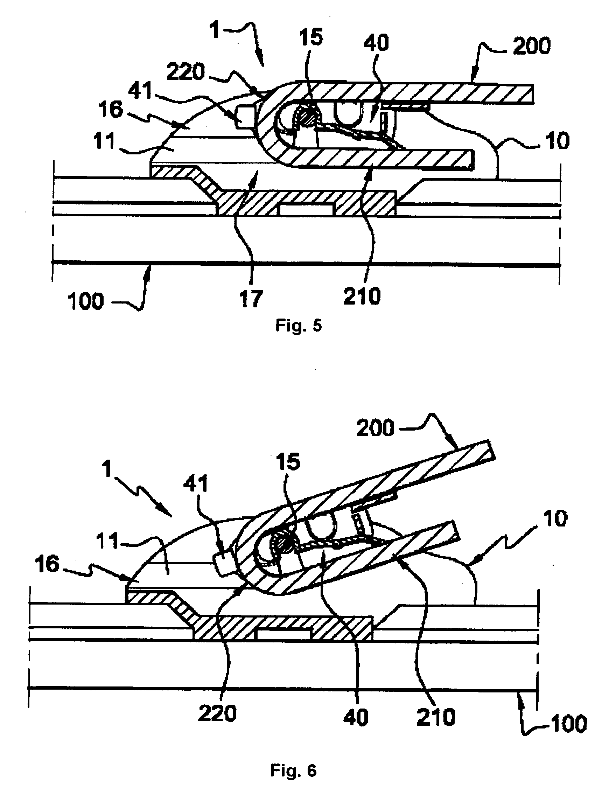

Ainsi qu'on peut le voir à la figure 5, en position de fonctionnement, l'inclinaison relative entre l'adaptateur 40 et le connecteur 10 est sensiblement nulle.

Cela signifie concrètement à l'usage que dans une telle position, le bras 200 s'étend de manière sensiblement parallèle au corps du balai 100 comme on peut le voir précisément sur la figure 5.

Conformément cette fois à la figure 6, en position d'assemblage, l'inclinaison relative entre l'adaptateur 40 et le connecteur 10 est sensiblement supérieure à la valeur maximale qui est susceptible d'être atteinte en position de fonctionnement par ladite inclinaison relative.

Cela signifie en d'autres termes qu'à l'usage et que dans une telle position, le bras 200 s'étend avec une inclinaison par rapport au corps du balai 100 qui est sensiblement supérieure à l'inclinaison relative maximale atteignable en position de fonctionnement. On remarque toutefois dans l'absolu que conformément à la figure 6, l'inclinaison de l'adaptateur 40 par rapport au connecteur 10 est relativement réduite en position d'assemblage, en tout cas bien loin d'un positionnement orthogonal.

Selon une particularité de l'invention, chaque dégagement 11, 12 peut être choisi parmi un logement, un évidement, un trou traversant, une découpe, un espace libéré après déformation élastique d'une portion du connecteur 10 située en regard de l'élément de verrouillage 41, 42 correspondant.

Il est important de signaler que chaque dégagement 11, 12 peut à priori présenter une forme, des dimensions et une orientation quelconque, sous réserve bien entendu qu'il soit en mesure de remplir pleinement sa fonction.

Selon une autre particularité de l'invention, le connecteur 10 est doté d'une ouverture avant 16 permettant l'engagement et le désengagement du crochet 210 dans ledit connecteur 10, suivant une direction sensiblement parallèle au corps du balai 100.

Cette caractéristique s'avère particulièrement avantageuse dès lors que le dispositif de fixation 1 est intégré sur un balai d'essuie-glace 100 plat. Comme cela a déjà été expliqué auparavant, il n'est en effet pas possible dans ce cas précis de réaliser un crochetage classique suivant une direction sensiblement orthogonale, de sorte qu'un crochetage suivant un axe parallèle au balai 100 constitue une solution qui doit être considérée comme optimale.

Selon une autre particularité de l'invention, le connecteur 10 est en outre pourvu d'un espace interne 17 qui permet tout d'abord le déplacement du crochet 210 entre la position de fixation dans laquelle il est complètement emboîté sur l'adaptateur 40 et une position dite de pré-assemblage dans laquelle il n'est que partiellement emboîté sur ledit adaptateur 40 sans être bloqué par chaque élément de verrouillage 41, 42. Mais cet espace interne 17 est également ménagé de manière à autoriser le pivotement entre la position d'assemblage et la position de fonctionnement, de l'ensemble constitué par l'adaptateur 40 et du bras 200 couplés en position de pré-assemblage.

Dans le mode particulier de réalisation des figures 1 à 7, choisi uniquement à titre d'exemple, le corps du connecteur 10 présente une forme en U dont les flancs latéraux 13, 14 supportent un axe de pivotement transversal 15 sur lequel l'adaptateur 40 est apte à venir s'emboîter après déformation élastique.

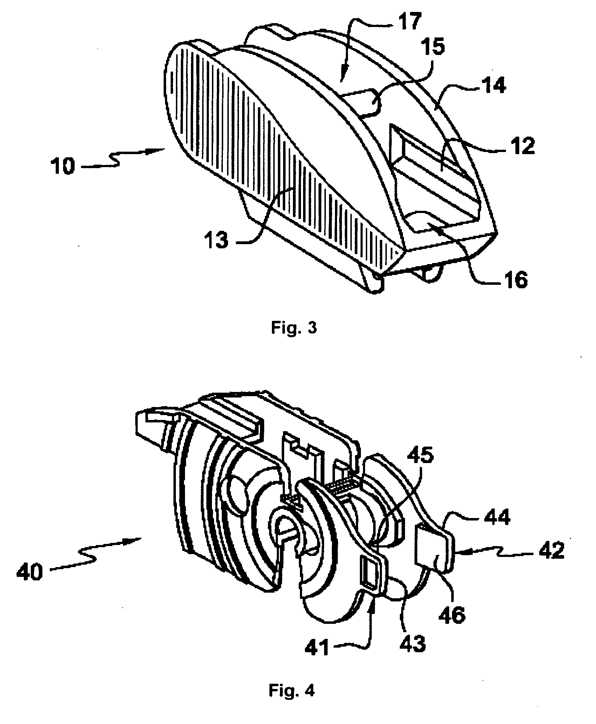

Dans ce contexte, l'espace interne 17 est bien évidemment formé par l'intervalle séparant les deux flancs latéraux 13, 14 du connecteur 10, tandis que l'ouverture avant 16 est constituée par l'extrémité ouverte de la forme en U. Par ailleurs, et conformément notamment à la figure 3, les deux dégagements 11, 12 se présentent quant à eux sous la forme de rainures sensiblement horizontales qui sont ménagées en vis-à-vis respectivement sur les faces internes des deux flancs latéraux 13, 14 du connecteur 10.

Dans l'exemple de réalisation des figures 1 à 7, au repos c'est-à-dire lorsqu'ils sont libres de toutes contraintes, les deux éléments de verrouillage 41, 42 s'étendent naturellement en position active. Cela implique qu'ils doivent être contraints pour passer en position passive.

Cette caractéristique sous-entend que le déverrouillage n'est pas automatique lorsque l'adaptateur 40 est basculé de la position de fonctionnement à la position d'assemblage, et que le passage en position passive des éléments de verrouillage 41, 42 nécessite au moins une opération supplémentaire qui peut prendre la forme d'une simple manipulation.

Ceci étant dit, conformément à une variante de réalisation non représentée, au moins un élément de verrouillage 41, 42 pourrait très bien au repos s'étendre en position passive, ce qu'il signifierait alors qu'il devrait être contraint pour passer en position active.

L'avantage d'une telle variante est que le verrouillage et le déverrouillage s'opèrent ici de manière totalement automatique, dès lors que l'adaptateur 40 passe respectivement de la position d'assemblage à la position de fonctionnement et inversement.

Ainsi qu'on peut le voir clairement notamment à la figure 4, chaque élément de verrouillage 41, 42 mis en oeuvre dans cet exemple de réalisation, est constitué par une patte flexible 43, 44 qui s'étend de manière sensiblement parallèle à la direction d'emboîtement de l'adaptateur 40 sur le crochet 210 du bras porte-balai 200, et qui est dotée à son extrémité d'une partie saillante 45, 46 formant butée à l'encontre de l'extrémité distale 220 du bras 200.

De manière particulièrement avantageuse, en position active, la partie saillante 45, 46 de chaque élément de verrouillage 41, 42 s'étend directement en regard de l'extrémité distale 220 du bras 200 lorsque le crochet 210 est en position de fixation.

Conformément à une autre caractéristique avantageuse, en position passive, la partie saillante 45, 46 de chaque élément de verrouillage 41, 42 s'étend à l'écart de la zone parcourue de manière effective par le crochet 210 lors du déplacement de ce dernier entre la position de fixation et la position de pré-assemblage.

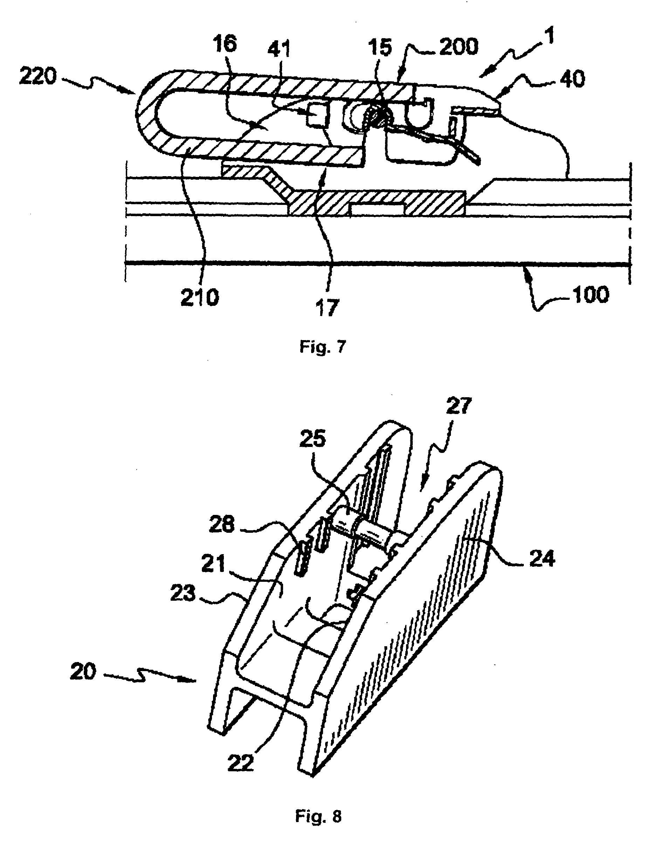

La figure 8 illustre un connecteur 20 de dispositif de fixation 1, qui est conforme à un second mode de réalisation de l'invention. Celui-ci se distingue du premier précédemment décrit, essentiellement de par la conformation intérieure du corps du connecteur 20, et plus précisément de par la nature des dégagements 21, 22 destinés à la déformation élastique des éléments de verrouillage 41, 42 portés par l'adaptateur 40 non représenté.

En effet, ce ne sont pas ici directement les flancs latéraux 23, 24 du connecteur 20 qui sont chargés de maintenir chaque élément de verrouillage 41, 42 en position active, mais une pluralité de nervures 28 qui sont ménagées au niveau des faces internes desdits flancs 23, 24. Cela signifie donc que les dégagements 21, 22 correspondent ici aux zones de l'espace interne 27 qui sont directement adjacentes aux portions des faces internes en question, qui ne supportent pas de nervures 28. Les dégagements 21, 22 sont bien plus que de simples logements comme dans le premier mode de réalisation, et doivent être considérés davantage comme des évidements de grandes tailles quoi qu'il en soit, le second mode de réalisation visible à la figure 8 ne constitue qu'un simple équivalent technique du premier, objet des figures 1 à 7.

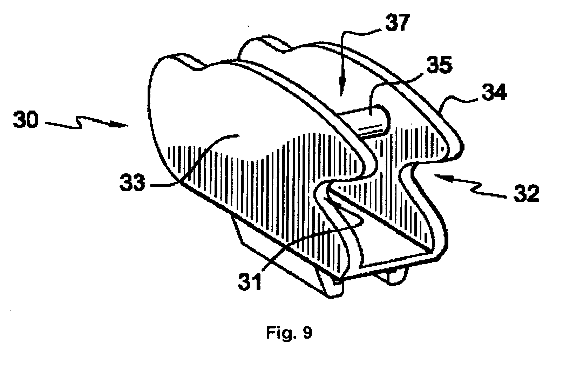

La figure 9 représente quant à elle un connecteur 30 de dispositif de fixation 1, qui est conforme à un troisième mode de réalisation de l'invention. Sa singularité réside elle aussi dans la nature particulière des dégagements 31, 32.

Ces derniers se présentent en effet ici sous la forme de découpes qui sont ménagées à travers les flancs latéraux 33, 34 du connecteur 30, et qui délimitent des portions d'espace libres tout à fait à même de permettre la déformation élastique des éléments de verrouillage 41, 42 portés par l'adaptateur 40 là encore non représenté.

La présente invention a été décrite dans le cadre d'un balai plat destiné à être monté sur un bras porte-balai présentant une extrémité dite crochet, mais il est entendu qu'elle ne se limite pas à des balais plats ni à des bras porte-balai présentant ce type d'extrémité.

Bien entendu, l'invention concerne également tout balai d'essuie-glace 100 doté d'un dispositif de fixation 1 tel que précédemment décrit.

Mais plus généralement, l'invention est en outre relative à tout système d' essuyage pourvu d'au moins un tel balai d'essuie-glace 100.

## Revendications

1. Dispositif de fixation (1) permettant le montage d'un balai d'essuie-glace (100) à un bras porte-balai (200), ledit dispositif de fixation (1) comportant,
- un connecteur (10, 20, 30) destiné à être fixé au balai (100), et
- un adaptateur (40) destiné à être couplé d'une part au bras (200) suivant une position dite de fixation et d'autre part au connecteur (10, 20, 30) de manière mobile suivant au moins deux positions, respectivement de verrouillage du bras, dite position de fonctionnement, et de déverrouillage du bras, dite position de montage, l'adaptateur (40) comportant au moins un élément de verrouillage (41, 42) apte à se déformer élastiquement entre une position active dans laquelle il bloque le bras (200) en position de fixation, et une position passive dans laquelle il autorise le déblocage du bras (200), le connecteur (10, 20, 30) comporte au moins un dégagement (11, 12, 21 , 22, 31, 32) permettant la déformation élastique dudit élément de verrouillage (41 , 42) entre sa position active et sa position passive, lorsque l'adaptateur (40) est en position de déverrouillage, l'adaptateur (40) est couplé au connecteur (10, 20, 30) par liaison pivotante, **caractérisé en ce que**, lorsque l'adaptateur (40) est en position de fonctionnement, celui-ci est pivoté par rapport au connecteur (10, 20, 30) selon une inclinaison donnée et lorsque l'adaptateur (40) est en position de montage, celui-ci est pivoté par rapport au connecteur (10, 20, 30) selon un inclinaison sensiblement distincte de celle de la position de fonctionnement.

2. Dispositif de fixation (1) selon la revendication 1, **caractérisé en ce qu'**en position de fonctionnement, l'inclinaison relative entre l'adaptateur (40) et le connecteur (10, 20, 30) est sensiblement nulle.

3. Dispositif de fixation (1) selon la revendication 1 ou 2, **caractérisé en ce qu'**en position de montage, l'inclinaison relative entre l'adaptateur (40) et le connecteur (10, 20, 30) est sensiblement supérieure à la valeur maximale qui est susceptible d'être atteinte en position de fonctionnement par ladite inclinaison relative.

4. Dispositif de fixation (1) selon l'une quelconque des revendications 1 à 3, **caractérisé en ce que** chaque dégagement (11, 12, 21, 22, 31, 32) est choisi parmi un logement, un évidement, un trou traversant, une découpe, un espace libéré après déformation élastique d'une portion du connecteur (10, 20, 30) située en regard de l'élément de verrouillage (41, 42) correspondant.

5. Dispositif de fixation (1) selon l'une quelconque des revendications 1 à 4, **caractérisé en ce que** le connecteur (10, 20, 30) comporte des moyens pour maintenir chaque élément de verrouillage (41, 42) en position active, lorsque l'adaptateur (40) est en position de verrouillage.

6. Dispositif de fixation (1) selon l'une quelconque des revendications 1 à 5, **caractérisé en ce que** le connecteur (10, 20, 30) comporte une ouverture avant (16, 26, 36) permettant l'engagement et le désengagement du bras (200) suivant une direction sensiblement parallèle au corps du balai (100).

7. Dispositif de fixation (1) selon l'une quelconque des revendications 1 à 6, **caractérisé en ce que** le connecteur (10, 20, 30) comporte un espace interne (17, 27, 37) permettant, d'une part le déplacement du bras (200) entre la position de fixation dans laquelle il est destiné à être complètement emboîté sur l'adaptateur (40) et une position dite de pré-assemblage dans laquelle il est partiellement emboîté sur ledit adaptateur (40) sans être bloqué par chaque élément de verrouillage (41 , 42), et d'autre part le passage entre la position de montage et la position de fonctionnement de l'adaptateur (40) couplé au bras (200) en position de pré-assemblage.

8. Dispositif de fixation (1) selon l'une quelconque des revendications 1 à 7, **caractérisé en ce que** le corps du connecteur (10, 20, 30) présente une forme en U dont les flancs latéraux (13, 14, 23, 24, 33, 34) supporte un axe transversal (15, 25, 35) sur lequel l'adaptateur (40) est apte à venir s'emboîter après déformation élastique.

9. Dispositif de fixation (1) selon l'une quelconque des revendications 1 à 8, **caractérisé en ce qu'**au repos, au moins un élément de verrouillage (41, 42) s'étend en position active et doit être contraint pour passer en position passive.

10. Dispositif de fixation (1) selon l'une quelconque des revendications 1 à 9, **caractérisé en ce qu'**au repos, au moins un élément de verrouillage (41, 42) s'étend en position passive et doit être contraint pour passer en position active.

11. Dispositif de fixation (1) selon l'une quelconque des revendications 1 à 10, **caractérisé en ce que** chaque élément de verrouillage (41, 42) comporte une patte flexible (43, 44) qui s'étend de manière sensiblement parallèle à la direction d'emboîtement de l'adaptateur (40) sur le bras (200), et qui est dotée à son extrémité d'une partie saillante (45, 46) formant butée à rencontre de l'extrémité distale (220) du bras (200).

12. Dispositif de fixation (1) selon la revendication 11, **caractérisé en ce qu'**en position active, la partie saillante (45, 46) de chaque élément de verrouillage (41, 42) s'étend directement en regard de l'extrémité distale (220) du bras (200) lorsqu'il est en position de fixation.

13. Dispositif de fixation (1) selon l'une des revendications 11 ou 12, **caractérisé en ce qu'**en position passive, la partie saillante (45, 46) de chaque élément de verrouillage (41, 42) s'étend à l'écart de la zone parcourue de manière effective par le bras (200) lors du déplacement dudit bras (200) entre la position de fixation et la position de pré-assemblage.

14. Balai d'essuie-glace (100), **caractérisé en ce qu'**il comporte un dispositif de fixation (1) selon l'une quelconque des revendications précédentes.

15. Système d'essuyage, **caractérisé en ce qu'**il comporte au moins un balai d'essuie-glace (100) selon la revendication précédente.

## Claims

1. A fixing device (1) enabling to mount a wiper blade (100) onto a blade holder arm (200), said fixing device (1) including:
- a connector (10, 20, 30) intended to be fixed to the wiper blade (100), and
- an adapter (40) intended to be coupled, on the one hand, to the arm (200) according to a so-called fixing position and, on the other hand, to the connector (10, 20, 30) so as to move according to at least two positions, respectively the so-called operating, arm locking position, and the so-called mounting, arm unlocking position, with the adapter (40) including at least one locking element (41, 42) able to resiliently deform between an active position wherein it locks the arm (200) in the fixing position, and a passive position wherein it enables the unlocking of the arm (200), the connector (10, 20, 30) includes at least one clearance (11, 12, 21, 22, 31, 32) enabling the resilient deformation of said locking element (41, 42) between the active position and the passive position thereof, when the adapter (40) is in unlocking position, the adapter (40) is coupled to the connector (10, 20, 30) by a pivoting connection, **characterised in that**, when the adapter (40) is in the operating position, the latter is rotated with respect to the connector (10, 20, 30) according to a given inclination and when the adapter (40) is in the mounting position, the latter is rotated with respect to the connector (10, 20, 30) according to an inclination substantially different from that of the operating position.

2. A fixing device (1) according to claim 1, **characterised in that**, in the operating position, the relative inclination between the adapter (40) and the connector (10, 20, 30) is substantially null.

3. A fixing device (1) according to claim 1 or 2, **characterised in that**, in the mounting position, the relative inclination between the adapter (40) and the connector (10, 20, 30) is substantially greater than the maximum value which is liable to be reached in the operating position by said relative inclination.

4. A fixing device (1) according to any one of claims 1 to 3, **characterised in that** each clearance (11, 12, 21, 22, 31, 32) is selected among a slot, a recess, a through-hole, a cut, a space released after the resilient deformation of one portion of the connector (10, 20, 30) located opposite the matching locking element (41, 42).

5. A fixing device (1) according to any one of claims 1 to 4, **characterised in that** the connector (10, 20, 30) includes means for holding each locking element (41, 42) in the active position, when the adapter (40) is in the locking position.

6. A fixing device (1) according to any one of claims 1 to 5, **characterised in that** the connector (10, 20, 30) includes one opening (16, 26, 36) enabling to engage and disengage the arm (200) along a direction substantially parallel to the body of the wiper blade (100).

7. A fixing device (1) according to any one of claims 1 to 6, **characterised in that** the connector (10, 20, 30) includes an internal space (17, 27, 37) enabling, on the one hand, the arm (200) to move between the fixing position wherein it is intended to be fully snapped onto the adapter (40) and a so-called pre-assembling position, wherein it is partially snapped onto said adapter (40) without being locked by each locking element (41, 42), and, on the other hand, the sweeping between the assembling position and the operating position of the adapter (40) coupled to the arm (200) in the pre-assembling position.

8. A fixing device (1) according to any one of claims 1 to 7, **characterised in that** the connector body (10, 20, 30) has a U shape, the sides (13, 14, 23, 24, 33, 34) of which carry a transversal pin (15, 25, 35) whereon the adapter (40) is able to snap after a resilient deformation.

9. A fixing device (1) according to any one of claims 1 to 8, **characterised in that**, at rest; at least one locking element (41, 42) extends in the active position and must be forced to move to the passive position.

10. A fixing device (1) according to any one of claims 1 to 9, **characterised in that**, at rest, at least one locking element (41, 42) extends in the passive position and must be forced to move to the active position.

11. A fixing device (1) according to any one of claims 1 to 10, **characterised in that** each locking element (41, 42) includes a flexible lug (43, 44) which extends substantially parallel to the direction of the snapping of the adapter (40) onto the arm (200), and the end of which is provided with a protruding part (45, 46), forming a stop meeting the distal end (220) of the arm (200).

12. A fixing device (1) according to claim 11, **characterised in that**, in the active position, the protruding part (45, 46) of each locking element (41, 42) directly extends opposite the distal end (220) of the arm (200) when it is in the fixing position.

13. A fixing device (1) according to any one of claims 11 or 12, **characterised in that**, in the passive position, the protruding part (45, 46) of each locking element (41, 42) extends away from the area actually wiped by the arm (200) during the motion of said arm (200) between the fixing position and the pre-assembling position.

14. A wiper blade (100) **characterised in that** it includes a fixing device (1) according to any one of the preceding claims.

15. A wiping system, **characterised in that** it includes at least one wiper blade (100) according to the preceding claim.

## Patentansprüche

1. Vorrichtung zur Befestigung (1) für die Montage eines Scheibenwischerblatts (100) an einen Scheibenwischerarm (200), wobei die besagte Befestigungsvorrichtung (1) folgende Teile umfasst:
- einen Verbinder (10, 20, 30), der am Scheibenwischerblatt (100) befestigt werden soll, und
- einen Adapter (40), der einerseits an den Arm (200) in einer Position, die sogenannte Befestigungsposition, gekoppelt werden soll und andererseits an den Verbinder (10, 20, 30), und dies auf mobile Weise nach zumindest zwei Positionen, nämlich mit Sperrung des Arms, die sogenannte Betriebsposition, beziehungsweise mit Freigabe des Arms, die sogenannte Montageposition, wobei der Adapter (40) zumindest ein Sperrelement (41, 42) umfasst, das geeignet ist, sich elastisch zu verformen, und dies zwischen einer aktiven Position, in der es den Arm (200) in Befestigungsposition sperrt, und einer passiven Position, in der es die Freigabe des Arms (200) zulässt, wobei der Verbinder (10, 20, 30) zumindest einen Freiraum (11, 12, 21, 22, 31, 32) umfasst, der die elastische Verformung des besagten Sperrelements (41, 42) zwischen seiner aktiven Position und seiner passiven Position zulässt, wenn der Adapter (40) in Freigabeposition ist, wobei der Adapter (40) an den Verbinder (10, 20, 30) durch eine Schwenkposition gekoppelt ist, **dadurch gekennzeichnet, dass**, wenn der Adapter (40) in Betriebsposition ist, er im Verhältnis zum Verbinder (10, 20, 30) mit einer gegebenen Abwinklung geschwenkt wird, und wenn der Adapter (40) in Montageposition ist, er im Verhältnis zum Verbinder (10, 20, 30) in einer Abwinklung geschwenkt wird, die sich deutlich von derjenigen der Betriebsposition unterscheidet.

2. Befestigungsvorrichtung (1) nach Anspruch 1, **dadurch gekennzeichnet, dass** in Betriebsposition die relative Abwinklung zwischen dem Adapter (40) und dem Verbinder (10, 20, 30) deutlich null ist.

3. Befestigungsvorrichtung (1) nach Anspruch 1 oder 2, **dadurch gekennzeichnet, dass** in Montageposition die relative Abwinklung zwischen dem Adapter (40) und dem Verbinder (10, 20, 30) deutlich größer als der maximale Wert ist, der in Betriebsposition von der besagten relativen Abwinklung erreicht werden kann.

4. Befestigungsvorrichtung (1) nach einem beliebigen der vorstehenden Ansprüche 1 bis 3, **dadurch gekennzeichnet, dass** jeder Freiraum (11, 12, 21, 22, 31, 32) unter einer Aufnahme, einer Aussparung, einem durchgehenden Loch, einem Ausschnitt, einem Raum gewählt wird, der nach elastischer Verformung eines Abschnitts des Verbinders (10, 20, 30) gegenüber dem entsprechenden Sperrelement (41, 42) freigegeben wird.

5. Befestigungsvorrichtung (1) nach einem beliebigen der vorstehenden Ansprüche 1 bis 4, **dadurch gekennzeichnet, dass** der Verbinder (10, 20, 30) Mittel umfasst, mit denen jedes Sperrelement (41, 42) in aktiver Position gehalten wird, wenn der Adapter (40) in Sperrposition ist.

6. Befestigungsvorrichtung (1) nach einem beliebigen der vorstehenden Ansprüche 1 bis 5, **dadurch gekennzeichnet, dass** der Verbinder (10, 20, 30) eine vordere Öffnung (16, 26, 36) umfasst, die den Eingriff und den Austritt des Arms (200) in einer deutlich zum Körper des Scheibenwischerblatts (100) parallelen Richtung ermöglicht.

7. Befestigungsvorrichtung (1) nach einem beliebigen der vorstehenden Ansprüche 1 bis 6, **dadurch gekennzeichnet, dass** der Verbinder (10, 20, 30) einen inneren Raum (17, 27, 37) umfasst, der einerseits die Bewegung des Arms (200) zwischen der Befestigungsposition, in der er vollkommen in den Adapter (40) eingefügt sein soll, und einer Position, der sogenannten Vormontage, in der er teilweise in den besagten Adapter (40) eingefügt ist, ermöglicht, ohne von jedem Sperrelement (41, 42) blockiert zu werden, und andererseits den Übergang zwischen der Montageposition und der Betriebsposition des an den Arm (200) in Vormontageposition gekoppelten Adapters (40) ermöglicht.

8. Befestigungsvorrichtung (1) nach einem beliebigen der vorstehenden Ansprüche 1 bis 7, **dadurch gekennzeichnet, dass** der Körper des Verbinders (10, 20, 30) eine U-Form aufweist, deren seitliche Flanken (13, 14, 23, 24, 33, 34) eine Querachse (15, 25, 35) tragen, auf der der Adapter (40) nach elastischer Verformung eingefügt werden kann.

9. Befestigungsvorrichtung (1) nach einem beliebigen der vorstehenden Ansprüche 1 bis 8, **dadurch gekennzeichnet, dass** sich in Ruhestellung zumindest ein Sperrelement (41, 42) in aktiver Position erstreckt und belastet werden muss, damit es in die passive Position geht.

10. Befestigungsvorrichtung (1) nach einem beliebigen der vorstehenden Ansprüche 1 bis 9, **dadurch gekennzeichnet, dass** sich in Ruhestellung zumindest ein Sperrelement (41, 42) in passiver Position erstreckt und belastet werden muss, damit es in die aktive Position geht.

11. Befestigungsvorrichtung (1) nach einem beliebigen der vorstehenden Ansprüche 1 bis 10, **dadurch gekennzeichnet, dass** jedes Sperrelement (41, 42) eine flexible Lasche (43, 44) umfasst, die sich deutlich parallel zur Einfügungsrichtung des Adapters (40) auf dem Arm (200) erstreckt, und die an ihrem Ende mit einem vorspringenden Teil (45, 46) versehen ist, der beim Treffen des entfernten Endes (220) des Arms (200) einen Anschlag bildet.

12. Befestigungsvorrichtung (1) nach Anspruch 11, **dadurch gekennzeichnet, dass** sich in aktiver Position der vorspringende Teil (45, 46) jedes Sperrelements (41, 42) direkt gegenüber dem entfernten Ende (220) des Arms (200) erstreckt, wenn er in Befestigungsposition ist.

13. Befestigungsvorrichtung (1) nach einem der Ansprüche 11 oder 12, **dadurch gekennzeichnet, dass** sich in passiver Position der vorspringende Teil (45, 46) jedes Sperrelements (41, 42) im Abstand von der Zone erstreckt, die effektiv vom Arm (200) bei der Bewegung des besagten Arms (200) zwischen der Befestigungsposition und der Vormontage-Position durchlaufen wird.

14. Scheibenwischerblatt (100), **dadurch gekennzeichnet, dass** es eine Befestigungsvorrichtung (1) nach einem beliebigen der vorstehenden Ansprüche umfasst.

15. Wischsystem, **dadurch gekennzeichnet, dass** es zumindest ein Scheibenwischerblatt (100) nach dem vorstehenden Anspruch umfasst.
